# EUROPEAN PATENT SPECIFICATION

(11) **EP 3 795 340 B1**
(45) Date of publication and mention of the grant of the patent: **30.10.2024**
(21) Application number: 19460050.8
(22) Date of filing: 23.09.2019
(51) Int. Cl.: B29C 70/08, B29C 70/32, B29C 70/86, B29C 53/00, B29C 53/56, B29C 53/60

(54) **HIGH PRESSURE CONTAINER AND METHOD OF ITS MANUFACTURE**
HOCHDRUCKBEHÄLTER UND VERFAHREN ZU DESSEN HERSTELLUNG
RÉCIPIENT À HAUTE PRESSION ET SON PROCÉDÉ DE FABRICATION

(43) Date of publication of application: 24.03.2021
(73) Proprietor: Techplast Spólka z o.o., 34-122 Wieprz (PL)
(72) Inventor: Saferna, Adam, 34-122 Wieprz (PL); Saferna, Piotr, 32-555 Zagórze (PL)
(74) Representative: Karczmitowicz, Teresa Ewa

(56) References cited:
- EP-A1- 0 465 252
- WO-A1-2013/184285
- WO-A2-2010/059068
- US-A- 5 568 878
- US-A1- 2018 283 609
- GROVE D A: "COMPOSITE PROCESSES", INTERNET CITATION, 7 October 2005 (2005-10-07), XP002470000, Retrieved from the Internet <URL:http://dx.doi.org/10.1002/0471786586> [retrieved on 20080221]

## Description

The subject of the invention is a high pressure container for pressurized liquids and gases, and a method of its manufacture. In particular the invention relates to a composite vessel comprising an inner casing, also called a tank, vessel or liner, and outer reinforcing layer made of the filament bundles wound around the outer surface of the casing and fixed with cured resin, wherein the casing is made of metal or plastic.

British patent GB1134033 (A) published 1968-11-20 discloses a method of making a pressure container comprising the provision of an inflatable bladder, surrounding the bladder with several layers of reinforcing strands impregnated with a heat curable material, inflating the bladder to a degree causing the reinforcing strands to be tensioned, and then heating the resulting body to cure the impregnating material. The strands of fibers, preferably glass fibers are stretched meridionally or helically between the two ends of the bladder on its entire surface. Hoop windings may also be applied either directly on to the meridional strands or in a preformed tube into which the body is slid. A cord or wire is wrapped circumferentially around the bladder to secure the strands in position.

In European patent application EP0203631 (A2) published 1986-12-03 an inner tank is surrounded by a wire extending continuously, impregnated or not with resin. This winding can be done in different ways, namely polar, hemi-axial or radial.

Also, in European patent application EP0333013 (A1) published 1989-09-20 a pressure vessel of fiber-reinforced plastic has an essentially cylindrical central portion and two end portions and is preferably provided with a gas-tight liner. The central portion comprises a tangential winding of the fiber material, and an axial winding of fiber material, located outside said tangential winding, and the fiber material of which extends out into and forms a reinforcement of the fiber material in the end portions. The central portion, including its tangential winding and its axial winding, in each of its parts located nearest to an end portion, is formed with a diameter which decreases in the direction towards the end portion.

Slightly different solution is proposed in earlier European patent application EP0300931 (A1) published 1989-01-25 wherein the filament winding constituting the outer casing is advantageously a cross winding comprising fibers coiled along the two diagonal planes of the cylindrical reservoir and the coiled fibers along its circumference, so that the density of the fibers at the ends of the cylindrical reservoir is greater than that at its wall.

According to European patent application EP0753700 (A1) published 1997-01-15 a composite pressure vessel has a plastic liner, which is reinforced with a fiber winding. The reinforcing wrap consists of a fiber reinforcement such as carbon, aramid, glass, boron, Al₂O₃ fibers or mixtures (hybrid yarns) thereof, in a matrix of thermosetting resins, e.g. epoxy or phenolic resins, or in thermoplastics, like PA12, PA6, PP etc. The fiber composite material consisting of fibers and polymers is applied in both the axial and tangential directions of the container, or the orientation of the fiber longitudinal axes have only a small angle (0° to 25°) relative to the container longitudinal axis in the case of the axial wrapping in the cylindrical container part.

Another European patent application EP1586807 (A2) published 2005-10-19 discloses a composite tank and a method of its manufacturing. The composite tank consists of an inner part and a two-piece collar connected with the inner part, and is covered with eight layers of composite material made of carbon fibers (inner layers) and glass fibers (outer layers).

In European patent application EP2112423 (A1) published 2009-10-28 and international patent application WO2010059068 (A2) published 2010-05-27 a multilayer container for pressurized liquids and gases is disclosed. Its outside surface is reinforced by winding resin-impregnated fibers, preferably glass, carbon, aramid, basalt, ceramide fibers, or several kinds of these fibers. Three methods of winding are applied: 1) cross method consisting in simultaneous rotation of the container or the winding head around the container and shift of the head alongside the length of the container reaching an angle of inclination falling within the range from 49° up to 59°; 2) polar method according to which fiber is wound when the winding head moves between the poles of the container; and 3) helical method, consisting in reinforcement of cylindrical part of the container. Individual packages of fibers are separated with a layer of resin from the set of polyester or epoxy resins. Depending on the kind of the resin used, the container wrapped with fibers passes to the furnace to harden resin or to initiate chemical reaction resulting in hardening of laminate.

European patent application EP3094914 (A1) published 2016-11-23 also discloses a high pressure composite vessel having an outer composite layer fabricated by making a load-bearing wound wraps of bundles of reinforcing filaments according to three winding patterns: helical, polar, and hoop, followed by thermal hardening.

American patent US5568878 (A) published 1996-10-26 describes a filament-wound pressure vessel which has a reinforced access opening. The pressure vessel comprises a blow-molded one piece liner having an outer surface defined by a cylindrical sidewall and oblate ellipsoidal ends. The liner defines at least one access opening into the vessel and the access opening has a cylindrical neck portion and a liner flange extending radially outwardly from an open distal end of the neck portion. A cylindrical reinforcement member surrounds the cylindrical neck portion and has a supporting flange at one end thereof, which engages and annular face of the liner flange. The reinforcement member has a radially extending supporting foot at the other end thereof, which contacts the outer surface of the liner. The reinforcement member comprises a plurality of separable arcuate segments so that it may be assembled around the cylindrical neck portion of the liner. A resin-impregnated filament-winding covers the liner and the supporting foot of the reinforcement member.

European patent application EP0465252 (A1) published 1992-01-08 discloses a container or conduit for compressed gas and/or cryogenic gas constructed with a gas impermeable synthetic polymer forming a gas barrier (liner), and a structural component that provides structural integrity to the container or conduit. The structural overwrap is made of a composite material and surrounds and may be bonded to or be in contact with the inner liner. The composite material is made of structural fibers which are consolidated within a matrix resin. Such structural fibers may be made of graphite, carbon, aramid (e. g., Kelvar), S2 glass, E glass, Boron, LCP's, and ultrahigh molecular weight polyethylene. These fibers are consolidated within matrices of thermoplastic or thermosetting matrix resins. Thermosetting matrix resins, however, are most popular and include epoxy, polyester, phenolic, bismaleimide (BMI), and polyimide resins. The composite material of the structural overwrap may be made by any technique for making composites, for example, hand lay-up, tape laying, braiding, or filament winding. Filament winding of continuous fibers, however, is preferred. The gas impermeable synthetic polymer is preferably a thermotropic liquid crystal polymer.

According to Dale A. Grove, "Composite processes" (section 8.3.3. "Filament Winding" in "Handbook of Plastic Processes" Charles A. Harper (ed.), Wiley-Interscience, John Wiley & Sons, Inc., 2006, pp. 518-520, the most often employed thermoset technique is wet filament winding, and there are essentially three winding techniques: circumferencial or hoop winding, helical winding, and polar winding. The first technique involves wrapping the materials in either a single band or multiple repeating bands.

Resin matrix used in production of composite vessels is often fiber reinforced. According to European patent application EP0553728 (A1) published 1993-08-04 combination of lightness in weight and resistance to failure in composite containers is possible due to the high specific strengths of the reinforcing fibers or filaments (carbon, glass, aramid, etc.) suspended in resin which, in the construction of pressure vessels, are typically oriented in the direction of the principal forces.

CNS-infused carbon nanomaterials and process therefor is described in international patent application WO2013184285 (A1) published 2013-12-12. A composition includes a carbon nanotube (CNT) yarn or sheet and a plurality of carbon nanostructures (CNSs) infused to a surface of the CNT yarn or sheet, wherein the CNSs are disposed substantially radially from the surface of the CNT yarn or outwardly from the sheet. If wet winding is desired, the CNT- infused carbon fiber materials can be passed through a resin bath and wound on a mandrel or spool. The resulting carbon fiber material/resin combination locks the CNTs on the carbon fiber material allowing for easier handling and composite fabrication. In some embodiments, CNT infusion is used to provide improved filament winding. Thus, CNTs formed on carbon fibers such as carbon tow, are passed through a resin bath to produce resin-impregnated, CNT-infused carbon tow. After resin impregnation, the carbon tow can be positioned on the surface of a rotating mandrel by a delivery head. The tow can then be wound onto the mandrel in a precise geometric pattern in known fashion.

In American patent application US20180283609 (A1) published 2018-10-04 a further step consisting of using a resin matrix with an additive of carbon nanotubes (CNTs) instead of suspended reinforcing fibers is described. A high pressure container according to this invention comprises a hollow liner capable of being sealed, its outer surface being covered with a reinforcement layer including composite carbon fiber bundles wound in laminated multiple layers. These carbon fiber bundles are fixed by a cured product of thermosetting resin. The reinforcement layer contains the cured product of thermosetting resin and a plurality of CNTs between a carbon fiber contained in one composite carbon fiber bundle and a carbon fiber contained in other composite carbon fiber bundle. CNTs suspended in the resin matrix adhere to the surfaces of the carbon fibers. Each of the plurality of continuous carbon fibers contained in the composite carbon fiber bundle is in contact with another carbon fiber via a cured product of thermosetting resin, and the plurality of CNTs. Since a plurality of CNTs are adhered to the surface of each of the plurality of carbon fibers, adhesive force between the carbon fiber and the cured product of thermosetting resin is enhanced due to anchor effects. As a result of that, peeling strength of the interface between the carbon fiber and the cured product of thermosetting resin increases. The method for manufacturing a high pressure container comprises the steps of: winding a composite carbon fiber bundle impregnated with a thermosetting resin enriched with CNTs around the outer surface of the hollow liner while applying a tensile load to the composite carbon fiber bundle, and forming the reinforcement layer by curing the thermosetting resin. Helical and hoop windings are applied.

What is very important in the context of the present invention and will be referred to hereinafter, it is that according to the disclosure contained in the above mentioned patent document US20180283609 (A1), as the CNTs, most preferably multi-walled carbon nanotubes (MWCNTs) were used, which were grown to have a diameter of 10 to 15 nm and a length of not less than 100 µm. In the present invention a radically different solution has been proposed.

The inventors of the proposed invention found that the micro- and nanobubbles present in resin and filled with various gases like air or vapors of water and organic solvents reduce the reinforcing properties of the composite outer layer. Especially solvents, used for example as suspension media of CNTs are problematic because the vapor bubbles are created in elevated temperature, i.e. during the phase of resin hardening. Also the air bubbles expand as the temperature increases. Finally, the resulting micro- and nanobubbles are freezed in the composite reinforcing layer and reduce its strength.

According to the proposed invention and as recited in claim 1 the method of manufacturing a highpressure container having a casing reinforced with an outer composite reinforcing layer, comprises subsequent stages;
A) an outer surface of the casing of the container is covered with a thin anti-adhesive layer preventing the reinforcing layer from binding to the casing;
B) an impregnating mixture of a resin composition and a nanoadditive is prepared in a mixing device at a pressure lower than a normal pressure of 1013 hPa;
C) the impregnating mixture is poured into a resin tray of a winding machine;
D) at least one bobbin of carbon filament bundles, each carbon filament bundle containing at least 4 thousands, preferably 24 to 36 thousands of carbon filaments, are mounted on the winding machine;
E) a curing agent is added to the impregnating mixture in a ratio of 29-30 wt.% of the impregnating mixture;
F) the carbon filament bundles are impregnated in a resin bath with use of the resin tray so that impregnated carbon filament bundle contains at least 65 wt.% of carbon filaments and at most 35 wt.% of composition of the impregnating mixture and the curing agent;
G) the carbon filament bundles are wound on the casing by wrapping impregnated carbon filament bundles in at least 6 different winding patterns;
H) the resulting composite reinforcing layer is thermally hardened. Anti-adhesive layer used in stage A can be made of heavy hydrodesulfurized petrol.

As recited in claim 1, the resin composition consists of at least 75 wt.%, preferably 75-95 wt.% of bis- [4- (2,3-epoxypropoxy) phenyl] propane, and up to 25 wt.%, preferably 5-25 wt.% of 1,4-bis (2,3-epoxypropoxy) butane. The nanoadditive consists of at least 80 wt.% of graphene nanotubes (GNTs), at most 15 wt.% of iron (Fe) nanoparticles, and at most 5% of other allotropic forms of carbon such as graphene flakes or fullerenes, and some moisture.

As recited in claim 1, GNTs in the form of single-walled graphene nanotubes (SWGNTs) are used. In the proposed invention SWGNTs have a diameter of 1-2 nm and a length of at most 20 micrometers, and length-to-diameter ratio of at least 100. In embodiments not covered by the appended claims, slightly different values can be applied as well, but in any case the SWCNTs diameter should be less than 10 nm. As was mentioned above, in the invention disclosed in US20180283609 (A1), mostly multi-walled carbon nanotubes (MWCNTs) were used as the CNTs, having a diameter exceeding 10 nm and a length of not less than 100 µm. This is clearly visible that CNTs used in the here proposed invention are much smaller: one order of magnitude thinner and also one order of magnitude shorter. It should be noted that this results in the CNTs' volume reduction of three orders of magnitude.

It was found, that using SWCNTs instead of MWCNTs one can significantly reduce the content of nanoadditives in the mixture with resin, at least by one order of magnitude, without any loss of the reinforcing power introduced by the CNTs. It was even found that the impact resistance of final products reinforced with the use of SWCNTs increased when compared with the same product but reinforced with MWCNTs, without any loss of pressure inside the container. Microphotograpic inspection of tested containers proved that mean length of propagation of microfractures resulting from impact test was significantly reduced. In the proposed invention the impregnating mixture contains 99.9-99.99 wt.% of the resin composition, and 0.01-0.1 wt.% of the nanoadditive.

According to an embodiment of the invention, pressure in the mixing device is set below 500 hPa, preferably 50-500 hPa. The lower the pressure, the more efficiently the gas dissolved in resin is removed. This is very important to combine reduced pressure and mixing of the impregnating mixture of a resin composition and a nanoadditive, because only during mixing dissolved gases and vapors have easy contact with the mixture surface. In other words, the mean distance of a bubble to surface is significantly reduced.

According to a further embodiment of the invention, mixing of the impregnating mixture consists of three stages:
a) stirring in the mixing device with a disperser blade rotating with circumferential speed of 7-15 m/s for at least 2.5 min/kg of mixture;
b) stirring in the mixing device with an ultrasonic stirrer of rated power equal to at least 130 W and rated frequency equal to at least 20 kHz for at least 2.5 min/kg of mixture;
c) steady increasing pressure in the mixing device to a normal pressure of 1013 hPa for 5 to 60 seconds.

The proposed circumferential speed of the disperser blade in stage "a" was experimentally selected to be high enough to trigger cavitation in the mixed material at the blade edges. It is recommended to combine both stages "a" and "b" into one stage, because combination of ultrasonic and mechanical stirring increases efficiency of cavitation which contributes to higher homogeneity of the mixture, helps in eliminating dissolved gases and prevents from diffusing gases from the outside into the mixture.

In a further embodiment of the invention, the curing agent which is added directly to the resin bath consists of 20-70 wt.% of polyoxypropylene diamine, 20-70 wt.% of diamino-methylcyclohexane, and at most 20 wt.% of 2-methylcyclohexane-1,3-diamine. In an embodiment of the invention, diameter of the carbon filament bundles equals to 4-10 micrometers, and tension of the carbon filament bundles in the winding machine is set to at least 10 N.

The winding patterns differ in angles of winding and a degree of surface coverage, they include helical, polar, and hoop patterns.

Thermal hardenin is a final operation of cured resin hardening, and can consist of subsequent stages:
1) 24 h in room temperature of 20-23 °C;
2) 2 h in temperature increasing to 45 °C;
3) 4 h in temperature of 45 °C;
4) 8 h in temperature increasing to 85 °C;
5) 12 h in temperature of 85 °C;
6) free cooling to ambient temperature.

As recited in claim 10, a high pressure container manufactured with the use of the above described method comprises a casing and an outer composite reinforcing layer made of the carbon filament bundles wound around the outer surface of the casing and fixed with cured impregnating mixture of a resin composition and a nanoadditive. The resin composition consists of at least 75 wt.%, preferably 75-95 wt.% of bis- [4- (2,3-epoxypropoxy) phenyl] propane, and up to 25 wt.%, preferably 5-25 wt.% of 1,4-bis (2,3-epoxypropoxy) butane. The nanoadditive consists of at least 80 wt.% of graphene nanotubes (GNTs), at most 15 wt.% of iron (Fe) nanoparticles, and at most 5% of other allotropic forms of carbon such as graphene flakes or fullerenes, and moisture. GNTs are single-walled graphene nanotubes (SWGNTs) and have diameter of 1-2 nm and length of at most 20 micrometers, and length-to-diameter ratio of at least 100. The impregnating mixture contains 99.9-99.99 wt.% of the resin composition, and 0.01-0.1 wt.% of the nanoadditive.

The outer composite reinforcing layer is wrapped using filament winding with at least 6 different winding patterns, and wherein each carbon filament bundle contains at least 4 thousands, preferably 24 to 36 thousands of carbon filaments. In an embodiment, curing agent consists of 20-70 wt.% of polyoxypropylene diamine, 20-70 wt.% of diamino-methylcyclohexane, and at most 20 wt.% of 2-methylcyclohexane-1,3-diamine. In an embodiment, diameter of the carbon filament bundles equals to 4-10 micrometers and the carbon filament bundles are wound on the casing by wrapping impregnated carbon filament bundles in at least 6 winding patterns differing in angles of winding and a degree of surface coverage, preferably including helical, polar, and hoop patterns. For most high pressure containers 6 reinforcing layers are sufficient, however in more demanding embodiments 10 layers are applied.

An embodiment of the high pressure container according to the proposed invention looks the same as in the drawing of the prior art document EP3094914 (A1), the only difference being in the structure and composition of the reinforcing layer. The figures in this drawing illustrate the container structure and winding patterns:

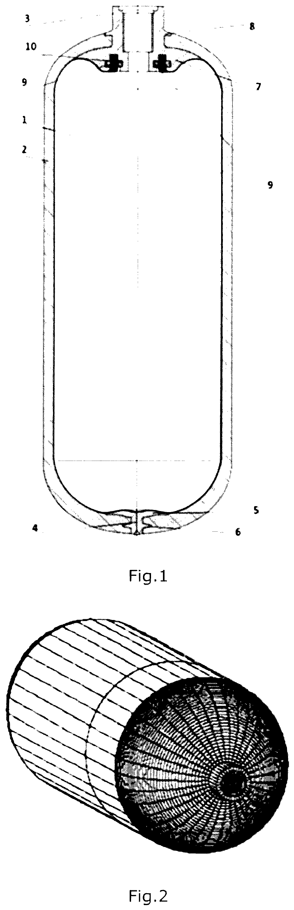

Fig. 1 shows axial cross-section of the container;
Fig. 2 illustrates a polar winding pattern;

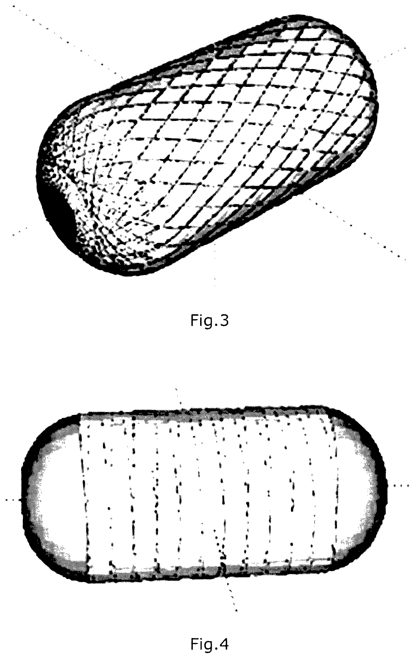

Fig. 3 shows a helical winding pattern, and
Fig. 4 shows a hoop or girth winding pattern.

The composite high pressure container for storing pressurized liquids and gases is manufactured in a sequence of operations: i) blow molding a plastic preform into final shape of the casing 1, ii) connecting the casing with a connection fitting 3 having a retaining collar 7 and an external annular boss 8, iii) connecting the casing with a bottom unit 4 having branched wings 5 and annular bosses 6, and iv) strengthening the container according to the claimed method by making a composite reinforcement 2 on the casing surface. The casing is immobilized in the connection fitting by gaskets (not shown) placed in a sealing groove 9 and a fixing groove 10. The composite reinforcing layer is fabricated by winding a bundle of filaments according to three winding patterns: helical, polar, and hoop.

The sequence of winding in this embodiment of the invention follows the scheme: four wraps in polar pattern, three wraps in helical pattern, three wraps in hoop pattern, and finally one wrap in polar pattern.

## Claims

1. Method of manufacturing a high pressure container having a casing (1) reinforced with an outer composite reinforcing layer (2), comprising subsequent stages:
A) an outer surface of the casing (1) of the container is covered with a thin anti-adhesive layer preventing the reinforcing layer (2) from binding to the casing (1);
B) an impregnating mixture of a resin composition and a nanoadditive is prepared in a mixing device at a pressure lower than a normal pressure of 1013 hPa;
C) the impregnating mixture is poured into a resin tray of a winding machine;
D) at least one bobbin of carbon filament bundles, each carbon filament bundle containing at least 4 thousands, preferably 24 to 36 thousands of carbon filaments, are mounted on the winding machine;
E) a curing agent is added to the impregnating mixture in a ratio of 29-30 wt.% of the impregnating mixture;
F) the carbon filament bundles are impregnated in a resin bath with use of the resin tray so that the impregnated carbon filament bundle contains at least 65 wt.% of carbon filaments and at most 35 wt.% of composition of the impregnating mixture and the curing agent;
G) the carbon filament bundles are wound on the casing (1) by wrapping the impregnated carbon filament bundles in at least 6 different winding patterns;
H) the resulting composite reinforcing layer (2) is thermally hardened,
and wherein the resin composition used for making the impregnating mixture consists of at least 75 wt.%, preferably 75-95 wt.% of bis- [4- (2,3-epoxypropoxy) phenyl] propane, and up to 25 wt.%, preferably 5-25 wt.% of 1,4-bis (2,3-epoxypropoxy) butane, the nanoadditive consists of at least 80 wt.% of graphene nanotubes, GNTs, at most 15 wt.% of iron (Fe) nanoparticles, and at most 5% of other allotropic forms of carbon such as graphene flakes or fullerenes, and moisture, wherein GNTs are single-walled graphene nanotubes, SWGNTs, and have diameter of 1-2 nm and length of at most 20 micrometers, and length-to-diameter ratio of at least 100, and wherein the impregnating mixture contains 99.9-99.99 wt.% of the resin composition, and 0.01-0.1 wt.% of the nanoadditive.

2. Method according to claim 1, **characterized in that** the pressure in the mixing device is set below 500 hPa, preferably 50-500 hPa.

3. Method according to any of claims 1 to 2, **characterized in that** mixing of the impregnating mixture consists of three stages:
a) stirring in the mixing device with a disperser blade rotating with circumferential speed of 7-15 m/s for at least 2.5 min/kg of mixture;
b) stirring in the mixing device with an ultrasonic stirrer of rated power equal to at least 130 W and rated frequency equal to at least 20 kHz for at least 2.5 min/kg of mixture;
c) steady increasing pressure in the mixing device to normal pressure of 1013 hPa for 5 to 60 seconds.

4. Method according to any of claims 1 to 3, **characterized in that** the curing agent consists of 20-70 wt.% of polyoxypropylene diamine, 20-70 wt.% of diamino-methylcyclohexane, and at most 20 wt.% of 2-methylcyclohexane-1,3-diamine.

5. Method according to any of claims 1 to 4, **characterized in that** the anti-adhesive layer is made of heavy hydrodesulfurized petrol.

6. Method according to any of claims 1 to 5, **characterized in that** diameter of the carbon filament bundles equals to 4-10 micrometers, and tension of the carbon filament bundles in the winding machine is set to at least 10 N.

7. Method according to any of claims 1 to 6, **characterized in that** the winding patterns differ in angles of winding and a degree of surface coverage.

8. Method according to any of claims 1 to 7, **characterized in that** the winding patterns include helical, polar, and hoop patterns.

9. Method according to any of claims 1 to 8, **characterized in that** the thermal hardening consists of subsequent stages:
1) 24 h in room temperature of 20-23 °C;
2) 2 h in temperature increasing to 45 °C;
3) 4 h in temperature of 45 °C;
4) 8 h in temperature increasing to 85 °C;
5) 12 h in temperature of 85 °C;
6) free cooling to ambient temperature.

10. High pressure container obtained by the method of claim 1 and comprising a casing (1) and an outer composite reinforcing layer (2) made of the carbon filament bundles wound around the outer surface of the casing (1) and fixed with cured impregnating mixture of resin composition and nanoadditive, **characterized in that** the resin composition used for making the impregnating mixture consists of at least 75 wt.%, preferably 75-95 wt.% of bis- [4- (2,3-epoxypropoxy) phenyl] propane, and up to 25 wt. %, preferably 5-25 wt.% of 1,4-bis (2,3-epoxypropoxy) butane, the nanoadditive consists of at least 80 wt. % of graphene nanotubes, GNTs, at most 15 wt.% of iron (Fe) nanoparticles, and at most 5% of other allotropic forms of carbon such as graphene flakes or fullerenes, and moisture, wherein GNTs are single-walled graphene nanotubes (SWGNTS) nanotubes, SWGNTs, and have diameter of 1-2 nm and length of at most 20 micrometers, and length-to-diameter ratio of at least 100, and **in that** the impregnating mixture contains 99.9-99.99 wt.% of the resin composition, and 0.01-0.1 wt.% of the nanoadditive, and also in that the outer composite reinforcing layer (2) is wrapped using filament winding with at least 6 different winding patterns, and wherein each carbon filament bundle contains at least 4 thousands, preferably 24 to 36 thousands of carbon filaments.

11. High pressure container according to claim 10, **characterized in that** the curing agent consists of 20-70 wt.% of polyoxypropylene diamine, 20-70 wt.% of diamino-methylcyclohexane, and at most 20 wt.% of 2-methylcyclohexane-1,3-diamine.

12. High pressure container according to claim 10 or 11, **characterized in that** diameter of the carbon filament bundles equals to 4-10 micrometers and the carbon filament bundles are wound on the casing (1) by wrapping the impregnated carbon filament bundles in at least 6 winding patterns differing in angles of winding and a degree of surface coverage, preferably including helical, polar, and hoop patterns.

## Patentansprüche

1. Verfahren zur Herstellung eines Hochdruckbehälters mit einem Gehäuse (1), das mit einer äußeren Verbundstoff-Verstärkungsschicht (2) verstärkt ist, das folgende Schritte umfasst:
A) die Außenfläche des Gehäuses (1) des Behälters wird mit einer dünnen Antihaftschicht bedeckt, die verhindert, dass sich die Verstärkungsschicht (2) mit dem Gehäuse (1) verbindet;
B) ein Imprägnierungsgemisch aus einer Harzzusammensetzung und einem Nanoadditiv wird in einer Mischvorrichtung bei einem Druck hergestellt, der unter einem Normaldruck von 1013 hPa liegt;
C) das Imprägnierungsgemisch wird in eine Harzschale einer Wickelmaschine gegossen;
D) mindestens eine Spule aus Kohlenstofffaserbündeln, wobei jedes Kohlenstofffaserbündel mindestens 4 tausend, vorzugsweise 24 bis 36 tausend Kohlenstofffilamente enthält, ist auf der Wickelmaschine montiert;
E) ein Härter wird dem Imprägnierungsgemisch in einem Verhältnis von 29-30 Gew.-% des Imprägnierungsgemisches zugesetzt;
F) die Kohlenstofffaserbündel werden in einem Harzbad unter Verwendung der Harzwanne so imprägniert, dass das imprägnierte Kohlenstofffaserbündel mindestens 65 Gew.-% der Kohlenstofffilamente und höchstens 35 Gew.-% der Zusammensetzung des Imprägnierungsgemisches und des Härters enthält;
G) die Kohlenstofffaserbündel werden auf das Gehäuse (1) gewickelt, indem die imprägnierten Kohlenstofffaserbündel in mindestens 6 verschiedenen Wickelmustern gewickelt werden;
H) die entstehende Verbundstoff-Verstärkungsschicht (2) wird thermisch ausgehärtet,
und wobei die zur Herstellung des Imprägnierungsgemisches verwendete Harzzusammensetzung aus mindestens 75 Gew.-%, vorzugsweise 75-95 Gew.-% Bis-[4-(2,3-epoxypropoxy)phenyl]propan und bis zu 25 Gew.-% Bis-[4-(2,3-epoxypropoxy)phenyl]propan, vorzugsweise 5-25 Gew.% 1,4-Bis(2,3-epoxypropoxy)butan besteht, das Nanoadditiv besteht zu mindestens 80 Gew.% aus Graphen-Nanoröhren GNTs, höchstens 15 Gew.% aus Eisen (Fe) Nanopartikel und höchstens 5 % anderer allotroper Formen von Kohlenstoff wie Graphenflocken oder Fullerene und Feuchtigkeit, wobei GNTs einwandige Graphen-Nanoröhren (SWGNTs) sind und einen Durchmesser von 1-2 nm und eine Länge von höchstens 20 Mikrometern aufweisen, und Länge-zu-Durchmesser-Verhältnis von mindestens 100, und wobei das Imprägnierungsgemisch 99,9-99,99 Gew.-% der Harzzusammensetzung und 0,01-0,1 Gew.-% des Nanoadditivs enthält.

2. Verfahren nach Anspruch 1, **dadurch gekennzeichnet, dass** der Druck in der Mischvorrichtung auf unter 500 hPa, vorzugsweise 50-500 hPa, eingestellt wird.

3. Verfahren nach einem der Ansprüche 1 bis 2, **dadurch gekennzeichnet, dass** das Mischen des Imprägnierungsgemisches aus drei Schritten besteht:
a) Rühren in der Mischvorrichtung mit Dispergierschaufel, die mit einer Umfangsgeschwindigkeit von 7-15 m/s rotiert, für mindestens 2,5 min/kg Gemisch;
b) Rühren in der Mischvorrichtung mit einem Ultraschallrührer mit einer Nennleistung von mindestens 130 W und einer Nennfrequenz von mindestens 20 kHz für mindestens 2,5 Minuten/kg Gemisch;
c) stetiger Druckanstieg in der Mischvorrichtung auf Normaldruck von 1013 hPa für 5 bis 60 Sekunden.

4. Verfahren nach einem der Ansprüche 1 bis 3, **dadurch gekennzeichnet, dass** der Härter aus 20-70 Gew.-% Polyoxypropylendiamin, 20-70 Gew.-% Diaminomethylcyclohexan und höchstens 20 Gew.-% 2-Methylcyclohexan -1,3-Diamin besteht.

5. Verfahren nach einem der Ansprüche 1 bis 4, **dadurch gekennzeichnet, dass** die Antihaftschicht aus stark hydrodesulfuriertem Benzin besteht.

6. Verfahren nach einem der Ansprüche 1 bis 5, **dadurch gekennzeichnet, dass** der Durchmesser der Kohlenstofffaserbündel 4-10 Mikrometer beträgt und die Spannung der Kohlenstofffaserbündel in der Wickelmaschine auf mindestens 10 N eingestellt ist.

7. Verfahren nach einem der Ansprüche 1 bis 6, **dadurch gekennzeichnet, dass** sich die Wickelmuster in den Wickelwinkeln und dem Grad der Flächenbedeckung voneinander unterscheiden.

8. Verfahren nach einem der Ansprüche 1 bis 7, **dadurch gekennzeichnet, dass** die Wickelmuster Spiral-, Polar- und Ringmuster umfassen.

9. Verfahren nach einem der Ansprüche 1 bis 8, **dadurch gekennzeichnet, dass** die thermische Härtung aus folgenden Schritten besteht:
1) 24 h bei Raumtemperatur von 20-23 °C;
2) 2 h bei Raumtemperatur steigend bis 45 °C;
3) 4 h bei Temperatur von 45 °C;
4) 8 h bei Raumtemperatur steigend bis 85 °C;
5) 12 h bei Temperatur von 85 °C;
6) freie Kühlung auf Umgebungstemperatur.

10. Hochdruckbehälter, erhalten durch das Verfahren nach Anspruch 1 und umfassend ein Gehäuse (1) und eine äußere Verbundstoff-Verstärkungsschicht (2), die aus Kohlenstofffaserbündeln besteht, die um die Außenfläche des Gehäuses (1) gewickelt und mit einem ausgehärteten Imprägnierungsgemisch aus Harzzusammensetzung und Nanoadditiv, **dadurch gekennzeichnet, dass** die zur Herstellung des Imprägnierungsgemisches verwendete Harzzusammensetzung zu mindestens 75 Gew.-%, vorzugsweise 75-95 Gew.-% aus Bis-[4-(2,3-epoxypropoxy)phenyl]propan besteht, und bis zu 25 Gew.-%, vorzugsweise 5-25 Gew.-% 1,4-Bis(2,3-epoxypropoxy)butan, das Nanoadditiv zu mindestens 80 Gew.-% aus Graphen-Nanoröhrchen GNTs, höchstens 15 Gew.-% aus Eisen (Fe)-Nanopartikeln und höchstens 5 % aus anderen allotropen Formen von Kohlenstoff wie Graphenflocken oder Fullerenen und Feuchtigkeit besteht, wobei GNTs einwandige Graphen-Nanoröhren (SWGNTs) sind und einen Durchmesser von 1-2 nm und eine Länge von höchstens 20 Mikrometer und ein Länge-zu-Durchmesser-Verhältnis von mindestens 100, aufweisen und dass das Imprägnierungsgemisch 99,9-99,99 Gew.-% der Harzzusammensetzung und 0,01-0,1 Gew.-% des Nanoadditivs enthält, und auch darin die äußere Verbundstoff-Verstärkungsschicht (2) durch Faserwickeln mit mindestens 6 verschiedenen Wickelmustern umwickelt ist und wobei jedes Kohlenstofffaserbündel mindestens 4 tausend, vorzugsweise 24 bis 36 tausend Kohlenstofffasern enthält.

11. Hochdruckbehälter nach Anspruch 10, **dadurch gekennzeichnet, dass** der Härter aus 20-70 Gew.-% Polyoxypropylendiamin, 20-70 Gew.-% Diaminomethylcyclohexan und höchstens 20 Gew.-% 2-Methylcyclohexan -1,3-Diamin besteht.

12. Hochdruckbehälter nach Anspruch 10 oder 11, **dadurch gekennzeichnet, dass** der Durchmesser der Kohlenstofffaserbündel 4 bis 10 Mikrometer beträgt und die Kohlenstofffaserbündel auf das Gehäuse (1) gewickelt sind, indem die imprägnierten Kohlenstofffaserbündel in mindestens 6 Wickelmustern gewickelt werden, die sich in Wicklungswinkeln und Grad der Oberflächenbedeckung unterscheiden, vorzugsweise sind es Spiral-, Polar- und Ringmuster.

## Revendications

1. Méthode de fabrication d'un récipient à haute pression ayant une enveloppe (1) renforcée par une couche de renforcement composite externe (2), comprenant les étapes suivantes:
A) une surface extérieure de l'enveloppe (1) du conteneur est recouverte d'une fine couche antiadhésive empêchant la couche de renforcement (2) de se lier à l'enveloppe (1) ;
B) un mélange d'imprégnation d'une composition de résine et d'un nano-additif est préparé dans un dispositif de mélange à une pression inférieure à la pression normale de 1013 hPa ;
C) le mélange d'imprégnation est versé dans le bac à résine d'une machine à bobiner;
D) au moins une bobine de faisceaux de filaments de carbone, chaque faisceau de filaments de carbone contenant au moins 4 milliers, de préférence 24 à 36 milliers de filaments de carbone, est montée sur la machine à enrouler;
E) un agent de durcissement est ajouté au mélange d'imprégnation dans une proportion de 29 à 30 % du poids du mélange d'imprégnation;
F) les faisceaux de filaments de carbone sont imprégnés dans un bain de résine à l'aide du bac à résine de sorte que le faisceau de filaments de carbone imprégné contienne au moins 65 % du poids des filaments de carbone et au plus 35 % du poids de la composition du mélange d'imprégnation et de l'agent de durcissement;
G) les faisceaux de filaments de carbone sont enroulés sur l'enveloppe (1) en enroulant les faisceaux de filaments de carbone imprégnés selon au moins 6 schémas d'enroulement différents;
H) la couche de renforcement composite obtenue (2) est durcie thermiquement,
et dans lequel la composition de résine utilisée pour fabriquer le mélange d'imprégnation est constituée d'au moins 75 % du poids, de préférence 75-95 % du poids de bis-[4-(2,3-époxypropoxy) phényl] propane, et jusqu'à 25 % du poids, de préférence 5-25 % du poids de 1,4-bis (2,3-époxypropoxy) butane, le nanoadditif est constitué d'au moins 80 % du poids de nanotubes de graphène GNT, d'au plus 15 % du poids de nanoparticules de fer (Fe) et d'au plus 5 % d'autres formes allotropiques de carbone telles que des flocons de graphène ou des fullerènes, et de l'humidité, dans laquelle les GNT sont des nanotubes de graphène à paroi simple SWGNT, et ont un diamètre de 1-2 nm et une longueur d'au plus 20 micromètres, et un rapport longueur/diamètre d'au moins 100, et dans laquelle le mélange d'imprégnation contient de 99.9-99,99 % du poids de la composition de résine et 0,01-0,1 % du poids du nanoadditif.

2. Méthode selon la revendication 1, **caractérisée par le fait que** la pression dans le dispositif de mélange est inférieure à 500 hPa, de préférence entre 50 et 500 hPa

3. Méthode selon l'une des revendications 1 à 2, **caractérisée par le fait que** le mélange d'imprégnation se fait en trois étapes :
a) agitation dans le dispositif de mélange avec une pale de dispersion tournant à une vitesse circonférentielle de 7-15 m/s pendant au moins 2,5 min/kg de mélange;
b) agitation dans le dispositif de mélange avec un agitateur à ultrasons d'une puissance nominale d'au moins 130 W et d'une fréquence nominale d'au moins 20 kHz pendant au moins 2,5 min/kg de mélange;
c) augmentation régulière de la pression dans le dispositif de mélange jusqu'à la pression normale de 1013 hPa pendant 5 à 60 secondes.

4. Méthode selon l'une des revendications 1 à 3, **caractérisé par le fait que** l'agent de durcissement est constitué de 20 à 70 % du poids de polyoxypropylène diamine, de 20 à 70 % du poids de diamino-méthylcyclohMC et de 20 à 50 % du poids de polypropylène diamine, de 20 à 50 % du poids de polypropylène diamine.

5. Méthode selon l'une des revendications 1 à 4, **caractérisé par le fait que** la couche antiadhésive est constituée d'essence lourde hydrodésulfurée.

6. Méthode selon l'une quelconque des revendications 1 à 5, **caractérisé par le fait que** le diamètre des faisceaux de filaments de carbone est égal à 4-10 micromètres et que la tension des faisceaux de filaments de carbone dans la machine d'enroulement est réglée à au moins 10 N

7. Méthode selon l'une des revendications 1 à 6, **caractérisée par le fait que** les motifs d'enroulement diffèrent par les angles d'enroulement et le degré de couverture de la surface.

8. Méthode selon l'une des revendications 1 à 7, **caractérisée par le fait que** les motifs d'enroulement comprennent des motifs hélicoïdaux, polaires et en forme de cerceau.

9. Méthode selon l'une des revendications 1 à 8, **caractérisée par le fait que** le durcissement thermique consiste en des étapes ultérieures:
1) 24 h à une température ambiante de 20-23 °C ;
2) 2 h à une température augmentant jusqu'à 45 °C ;
3) 4 h à une température de 45 °C;
4) 8 h à une température de 85 °C ;
5) 12 h à une température de 85 °C ;
6) refroidissement libre à la température ambiante.

10. Récipient à haute pression obtenu par la méthode de la revendication 1 et comprenant une enveloppe (1) et une couche de renforcement composite extérieure (2) constituée de faisceaux de filaments de carbone enroulés autour de la surface extérieure de l'enveloppe (1) et fixés avec un mélange d'imprégnation durci de composition de résine et de nanoadditif, **caractérisé par le fait que** la composition de résine utilisée pour préparer le mélange d'imprégnation consiste en au moins 75 % du poids, de préférence 75-95 % du poids de bis-[4- (2,3-époxypropoxy) phényl] propane, et jusqu'à 25 % du poids, de préférence 5-25 % du poids de 1,4-bis (2,3-époxypropoxy) butane, le nanoadditif est constitué d'au moins 80 % du poids de nanotubes de graphène GNT, d'au plus 15 % du poids de nanoparticules de fer (Fe), et d'au plus 5 % d'autres formes allotropiques de carbone telles que des flocons de graphène ou des fullerènes, et de l'humidité, dans lequel les GNT sont des nanotubes de graphène à paroi simple SWGNT, et ont un diamètre de 1-2 nm et une longueur d'au plus 20 micromètres, et un rapport longueur/diamètre d'au moins 100, et dans lequel le mélange d'imprégnation contient de 99.9-99,99 % du poids de la composition de résine, et 0,01-0,1 % du poids du nanoadditif, et aussi en ce que la couche composite extérieure de renforcement (2) est enveloppée en utilisant un enroulement filamentaire avec au moins 6 modèles d'enroulement différents, et dans lequel chaque faisceau de filaments de carbone contient au moins 4 milliers, de préférence 24 à 36 milliers de filaments de carbone.

11. Récipient à haute pression selon la revendication 10, **caractérisé par le fait que** l'agent de durcissement est constitué de 20 à 70 % du poids de diamine de polyoxypropylène, de 20 à 70 % du poids de diamino-méthylcyclohexane et d'au plus 20 % du poids de 2-méthylcyclohexane-1,3-diamine.

12. Récipient à haute pression selon la revendication 10 ou 11, **caractérisé par le fait que** le diamètre des faisceaux de filaments de carbone est égal à 4-10 micromètres et que les faisceaux de filaments de carbone sont enroulés sur l'enveloppe (1) en enveloppant les faisceaux de filaments de carbone imprégnés dans au moins 6 schémas d'enroulement différant par les angles d'enroulement et le degré de couverture de la surface, comprenant de préférence des motifs hélicoïdaux, polaires et en forme de cerceau.
